# EUROPEAN PATENT APPLICATION

(11) **EP 3 067 232 A1**
(43) Date of publication of application: **14.09.2016**
(21) Application number: 16158857.9
(22) Date of filing: 07.03.2016
(51) Int. Cl.: B60L 11/00, B60H 1/00, B01D 46/00, H01M 10/623, H01M 10/613

(54) **COOLING DUCT APPARATUS FOR ONBOARD BATTERY**

(30) Priority: 09.03.2015 JP 2015046312
(71) Applicant: Toyota Jidosha Kabushiki Kaisha, Toyota-shi, Aichi-ken 471-8571 (JP)
(72) Inventor: NAGAMINE, Koichi, Toyota-shi, Aichi-ken, 471-8571 (JP); KITAMURA, Masahiko, Toyota-shi, Aichi-ken, 471-8571 (JP)
(74) Representative: Intès, Didier Gérard André

(57) **Abstract**

A bezel (40) is provided on an inlet (12) of an air intake duct (10). A filter (60) that has a zigzag shape (a mountain and valley shape) is arranged on a back surface of the bezel (40). An outer peripheral portion (64) of the filter (60) is sandwiched by the bezel (40) and an interior trim (20). Also, a protruding portion (52) that restricts surface displacement of the filter (60) by being inserted into a recessed portion provided to an inside of an outer peripheral portion of the filter (60) is provided on the bezel (40).

## Description

### 1. Field of the Invention

The invention relates to a cooling duct apparatus for an onboard battery that introduces cooling air into a battery module mounted in a vehicle. More particularly, the invention relates to a cooling duct apparatus for an onboard battery, which is provided with a filter that removes foreign matter.

### 2. Description of Related Art

Battery modules that store power to be supplied to a motor for running a vehicle are mounted in hybrid vehicles and electric vehicles and the like. When the temperature of the battery module become high, the battery module deteriorates, so cooling air is typically sent to cool the battery module. Normally, a filter is provided in the flow path of the cooling air to remove foreign matter that may end up being supplied to the battery module together with the cooling air.

Japanese Patent Application Publication No. 2013-234486 (JP 2013-234486 A) describes technology for attaching a filter formed in a zigzag shape to construction machinery.

In an apparatus described in Japanese Patent Application Publication No. 2014-72182 (JP 2014-72182 A), a bezel and a filter are arranged on an upstream side of an air intake duct that draws in air for cooling a battery module.

If the filter is not sufficiently fixed and air is drawn in while there is foreign matter accumulated in the filter, problems may occur, e.g., the filter may tend to slip out of place due to the weight of the foreign matter, or foreign matter may get into a blower or the like arranged downstream of the air intake duct.

### SUMMARY OF THE INVENTION

The invention thus provides a cooling duct apparatus for an onboard battery that draws in air to cool a battery module, in which a filter will not easily slip out of the duct flow path.

One aspect of the invention relates to a cooling duct apparatus for an onboard battery. This cooling duct apparatus includes an air intake duct configured to lead cooling air to a battery module mounted in a vehicle for cooling said battery module mounted, a bezel provided on an inlet of the air intake duct, a filter provided on a back surface of the bezel, and a supporting member that fixes the filter to the bezel. A protruding portion that restricts surface displacement of the filter with respect to the air intake duct by being inserted into a recessed portion provided to an inside of an outer peripheral portion of the filter, is provided on at least one of the bezel and the supporting member.

In the cooling duct apparatus according to the invention, a plurality of protruding and recessed portions may be provided lined up in a predetermined direction on the filter, and the protruding portion may be provided in a position corresponding to the recessed portion provided to the inside of the outer peripheral portion of the filter, on at least one of the bezel and the supporting member.

In the cooling duct apparatus according to the invention, the protruding portion may be disposed in a portion among the recessed portions included in the plurality of protruding and recessed portions.

In the cooling duct apparatus according to the invention, the supporting member may be an interior trim of the vehicle.

The invention therefore reduces risks for the filter in a cooling duct apparatus to slip out of a duct flow path, or even prevents such risks, and provides with a filter which is prevented from slipping out of a duct flow path and therefore from being inhibited, in a cooling duct apparatus for an onboard battery that draws in air to cool a battery module.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a sectional view showing a frame format of a duct apparatus according to a first example embodiment of the invention, viewed from the left side of a vehicle;
FIG. 2 is a sectional view showing a frame format of the duct apparatus according to the first example embodiment, viewed from above the vehicle;
FIG. 3 is a perspective view of a bezel;
FIG. 4 is an enlarged perspective view of the bezel;
FIG. 5 is a further enlarged perspective view of the bezel;
FIG. 6 is a perspective view of a filter;
FIG. 7 is an enlarged sectional view of a filter fixing clip and the filter;
FIG. 8 is an enlarged sectional view of another filter fixing clip and the filter;
FIG. 9 is a sectional view of the bezel and the filter;
FIG. 10 is a sectional view of the duct apparatus according to the first example embodiment;
FIG. 11 is a sectional view showing a frame format of a duct apparatus according to a second example embodiment of the invention, viewed from above the vehicle;
FIG. 12 is a perspective view of a support frame in the second example embodiment;
FIG. 13 is a perspective view of a filter in the second example embodiment;
FIG. 14 is an enlarged sectional view of a protruding portion and the filter; and
FIG. 15 is a sectional view showing a frame format of a duct apparatus according to a comparative example.

### DETAILED DESCRIPTION OF EMBODIMENTS

### [First example embodiment]

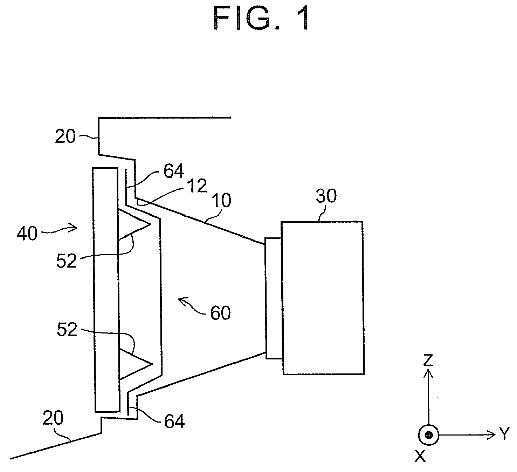

FIG. 1 is a sectional view of a duct apparatus according to a first example embodiment of the invention, viewed from a side (in an X direction) of the duct apparatus. This duct apparatus is typically mounted in a vehicle such as a hybrid vehicle or an electric vehicle. A battery module that stores power to be supplied to a motor for running the vehicle is mounted in the vehicle such as a hybrid vehicle or an electric vehicle. The duct apparatus is an apparatus that draws in cooling air for cooling this battery module, and supplies it to the battery module. This duct apparatus will be described hereinafter.

An air intake duct 10 includes an inlet 12 for drawing in cooling air. The inlet 12 is exposed to the inside of a vehicle cabin from an interior trim 20 of the vehicle, and air inside the vehicle cabin is drawn into the air intake duct 10 from the inlet 12. The interior trim 20 is a cover provided underneath a seat, for example, and the inlet 12 is provided in this cover. Naturally, the inlet 12 may be provided in another position inside the vehicle cabin.

A blower 30 is connected to the air intake duct 10. Air from inside the vehicle cabin is drawn into the air intake duct 10 via the inlet 12 by the blower 30 when said blower 30 is driven. The air that has passed through the blower 30 is sent to a battery module, not shown, such that the battery module is cooled.

A cross-sectional area (i.e., the cross-sectional area on the ZX plane) of the flow path inside the air intake duct 10 is largest at the position of the inlet 12, and gradually becomes smaller nearer the blower 30. Employing this structure makes it possible to hydrodynamically reduce ventilation resistance (pressure loss) in the flow path.

A bezel 40 is provided on the inlet 12 of the air intake duct 10. This bezel 40 is formed in a lattice shape, for example. A filter 60 is attached to a back surface of the bezel 40, between the bezel 40 and the air intake duct 10.

The filter 60 has a network structure, and is used to remove foreign matter such as dust that passes through the air intake duct 10. Air that has entered through the inlet 12 passes through the filter 60, while foreign matter that has entered through the inlet 12 adheres to the filter 60. A nonwoven fabric or mesh type filter, for example, may be used as the filter 60. An outer peripheral portion 64 of the filter 60 is sandwiched by the bezel 40 and the interior trim 20.

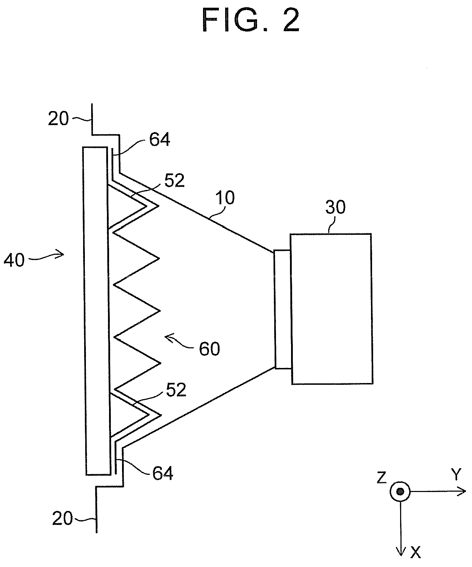

FIG. 2 is a sectional view of the duct apparatus according to the first example embodiment, viewed from above the duct apparatus (in the Z direction). The filter 60 is formed as a plurality of protruding and recessed portions in a zigzag shape (commonly described as a "mountain and valley shape"), for example, in order to increase the surface area of the filter 60.

Here, when the Z direction is the vertical direction of the vehicle, protruding portions 52 are provided in positions on the upper and lower sides of the back surface of the bezel 40. Also, when the X direction is the left-right direction of the vehicle, the protruding portions 52 are provided in positions on the left and right sides on the back surface of the bezel 40. The protruding portions 52 are protrusions for preventing the filter from coming off, and are inserted between mountains (protruding portions) of the filter 60, i.e., in valley portions (recessed portions). If the protruding portions 52 were not inserted into the recessed portions of the filter 60, the filter 60 may come out of position in the plane due to vibration or wind or the like, such that force may be applied to the outer peripheral portion 64 of the filter 60, and the filter 60 may tend to slip out of the duct flow path. In this example embodiment, the protruding portions 52 are inserted into recessed portions in the filter 60, so surface displacement of the filter 60 is restricted and the filter 60 will not easily slip out of the duct flow path.

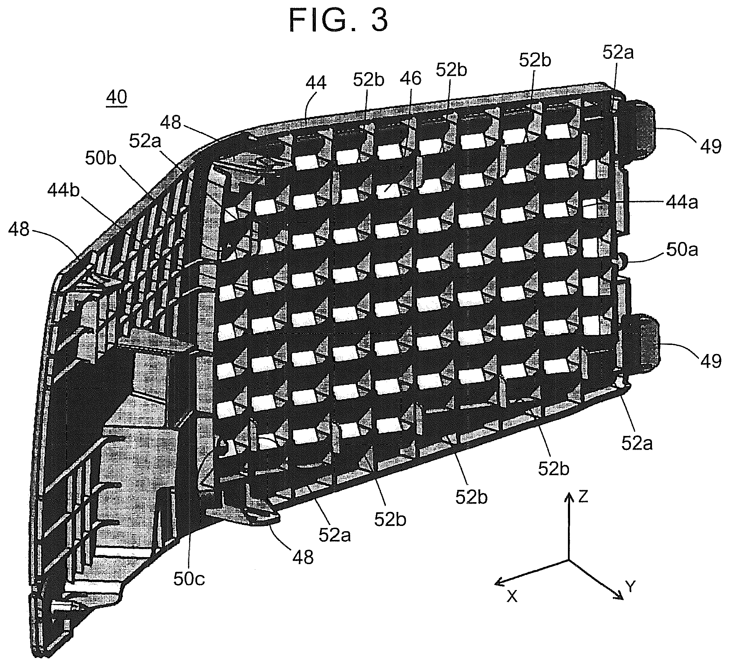

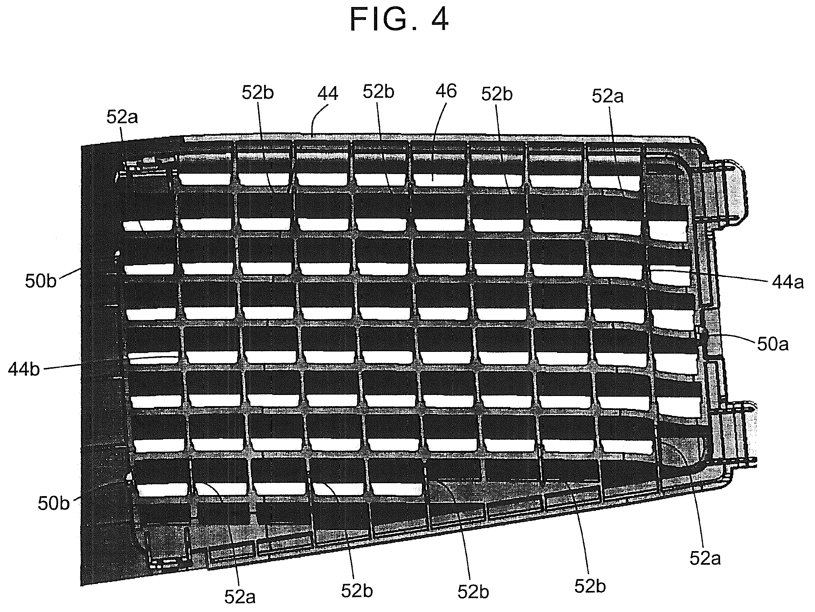

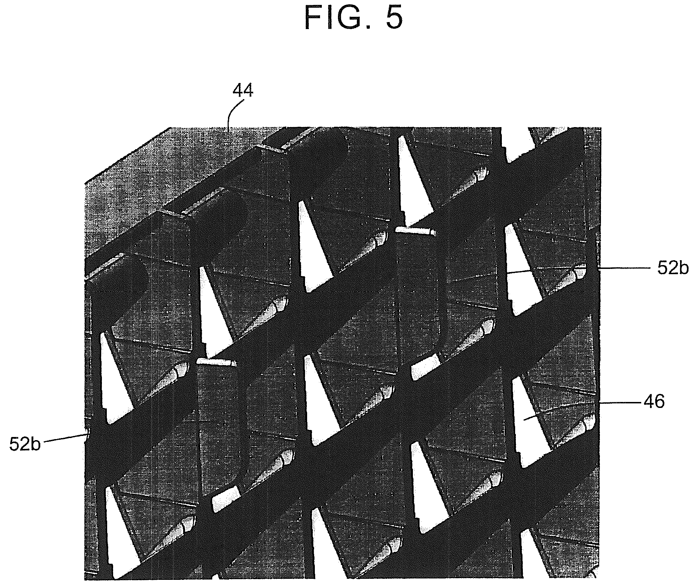

Next, the specific structure of the bezel 40 will be described with reference to FIGS. 3 to 5. FIG. 3 is a perspective view of the overall structure of the bezel 40. FIGS. 4 and 5 are enlarged perspective views of the bezel 40.

As shown in FIG. 3, the overall bezel 40 has a rectangular shape, with a lattice portion 44 having a grid-like shape formed on a portion thereof. Air from the vehicle cabin is drawn into the air intake duct 10 via openings 46 in the lattice portion 44. In this example embodiment, protruding bezel fixing clips 48 for attaching the bezel 40 to the interior trim 20 are provided in positions on the upper and lower sides of the back surface of the bezel 40, in order to join the bezel 40 to the inlet 12 of the air intake duct 10. In the example shown in FIG. 3, two bezel fixing clips 48 are provided in positions on the upper side, and one bezel fixing clip 48 is provided in a position on the lower side. Also, a hook 49 for locking the bezel 40 to the interior trim 20 is provided on a right end portion of the back surface of the bezel 40. In the example shown in FIG. 3, two hooks 49 are provided. Mounting holes are formed in positions corresponding to the bezel fixing clips 48, in the interior trim 20. Also, locking holes are formed in positions corresponding to the hooks 49. The bezel 40 is fixed to the interior trim 20 by each bezel fixing clip 48 being inserted and fixed to a corresponding mounting hole, and the hooks 49 being inserted into and fixed to the locking holes.

Also, as shown in FIGS. 3 and 4, protruding filter fixing clips 50a, 50b, and 50c for attaching the filter 60 to the bezel 40 are provided on the back surface of the bezel 40. The filter fixing clip 50a is provided on a right side end portion of the lattice portion 44, and the filter fixing clips 50b and 50c are provided on a left side end portion of the lattice portion 44. Mounting holes are formed in positions corresponding to the filter fixing clips 50a, 50b, and 50c, in the filter 60. The filter 60 is attached and fixed to the bezel 40 by the filter fixing clips 50a, 50b, and 50c being inserted into the corresponding mounting holes. The filter fixing clips 50a, 50b, and 50c form supporting members that fix the filter 60 to the bezel 40.

Also, protruding portions 52 are provided in positions corresponding to recessed portions provided to the inside of the outer peripheral portion 64 of the filter 60, on the back surface of the bezel 40. For example, as shown in FIGS. 3 and 4, protruding portions 52a are provided, one in a position on the upper side of the lattice portion 44 and one in a position on the lower side of the lattice portion 44, on a lattice member 44a in the first row from a right end portion of the lattice portion 44. These protruding portions 52a are members that correspond to a recessed portion provided to the inside of the outer peripheral portion 64 on the right side of the filter 60. Also, protruding portions 52a are provided, one protruding portion 52a being positioned on the upper side of the lattice portion 44 and one protruding portion 52a being positioned on the lower side of the lattice portion 44, on a lattice member 44b in the first row from a left end portion of the lattice portion 44. These protruding portions 52a are members that correspond to a recessed portion provided to the inside of the outer peripheral portion 64 on the left side of the filter 60.

Moreover, protruding portions 52b are provided, one in a position on the upper side of the lattice portion 44 and one in a position on the lower side of the lattice portion 44, on three other lattice members provided between the lattice member 44a and the lattice member 44b. That is, three protruding portions 52b are provided on the upper side of the lattice portion 44 and three protruding portions 52b are provided on the lower side of the lattice portion 44.

As shown in FIG. 5, the protruding portions 52 are provided along the lattice members, on the lattice members. In this way, the protruding portions 52 are arranged so as not to impede and form resistances to the flow of air passing through the openings 46.

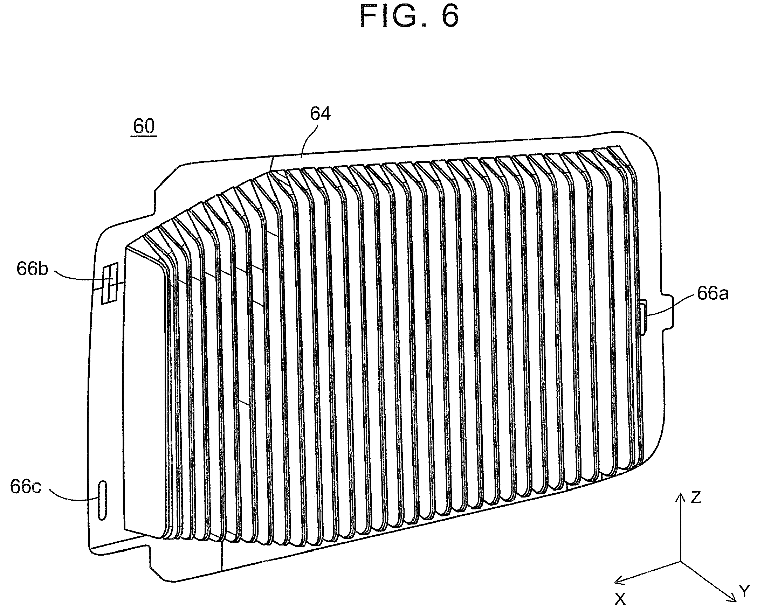

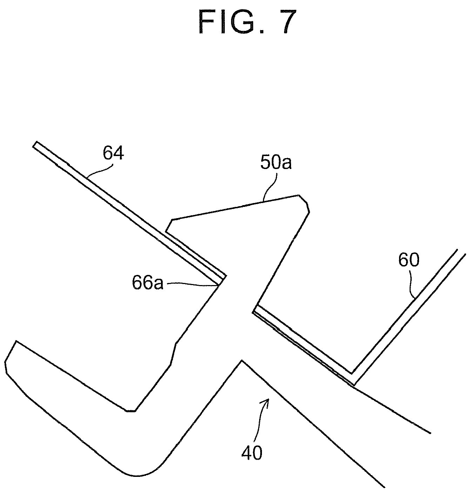

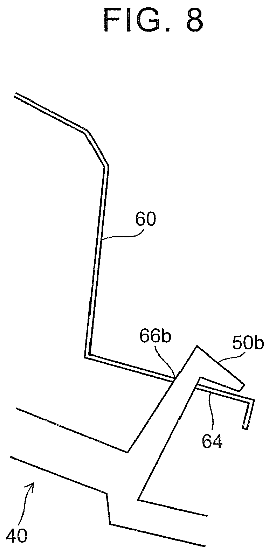

FIG. 6 is a view of the specific structure of the filter 60. The filter 60 has an overall rectangular shape, and a filter surface thereof is formed as a plurality of protruding and recessed portions in a zigzag shape (mountain and valley shape). That is, when the X direction (a predetermined direction) is a crosswise direction and a Z direction that is orthogonal to the X direction is a vertical direction, the plurality of protruding and recessed portions (mountain and valley portions) are provided lined up in the crosswise direction of the filter 60, and these protruding and recessed portions extend in the vertical direction. The flat outer peripheral portion 64 is provided on an outer periphery of the filter 60, and mounting holes 66a, 66b, and 66c are formed in this outer peripheral portion 64. The mounting hole 66a corresponds to the filter fixing clip 50a of the bezel 40, the mounting hole 66b corresponds to the filter fixing clip 50b of the bezel 40, and the mounting hole 66c corresponds to the filter fixing clip 50c of the bezel 40. For example, the filter fixing clip 50a is inserted into the mounting hole 66a, as shown in FIG. 7, and the filter fixing clip 50b is inserted into the mounting hole 66b, as shown in FIG. 8. Similarly, the filter fixing clip 50c is inserted into the mounting hole 66c. As a result, the filter 60 is attached and fixed to the bezel 40.

In the first example embodiment, the filter fixing clips 50a, 50b, and 50c of the bezel 40, and the mounting holes 66a, 66b, and 66c of the filter 60, function as supporting members for fixing the outer peripheral portion 64 of the filter 60 to the bezel 40.

When the filter 60 is attached to the bezel 40, the protruding portions 52 provided on the bezel 40 are inserted into the recessed portions (valley portions) of the filter 60. More specifically, the protruding portions 52a on the lattice member 44a in the first row on the right side of the bezel 40 are inserted into the recessed portion provided to the inside of the outer peripheral portion 64 on the right side of the filter 60. More specifically, the protruding portion 52a on the upper side of the lattice member 44a is inserted into the upper side of the recessed portion, and the protruding portion 52a on the lower side is inserted into the lower side of the recessed portion. Similarly, the protruding portion 52a on the lattice member 44b in the first row on the left side is inserted into a recessed portion provided to the inside of the outer peripheral portion 64 on the left side of the filter 60. More specifically, the protruding portion 52a on the upper side of the lattice member 44b is inserted into the upper side of the recessed portion, and the protruding portion 52a on the lower side is inserted into the lower side of the recessed portion. Further, the protruding portions 52b on three other lattice members provided between the lattice member 44a and the lattice member 44b are inserted into corresponding recessed portions, respectively. More specifically, the protruding portions 52b on the upper side of the lattice members are inserted into the upper side of the recessed portions, and the protruding portions 52b on the lower side are inserted into the lower side of the recessed portions.

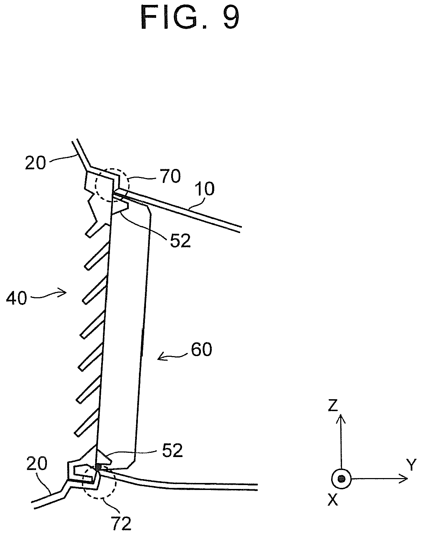

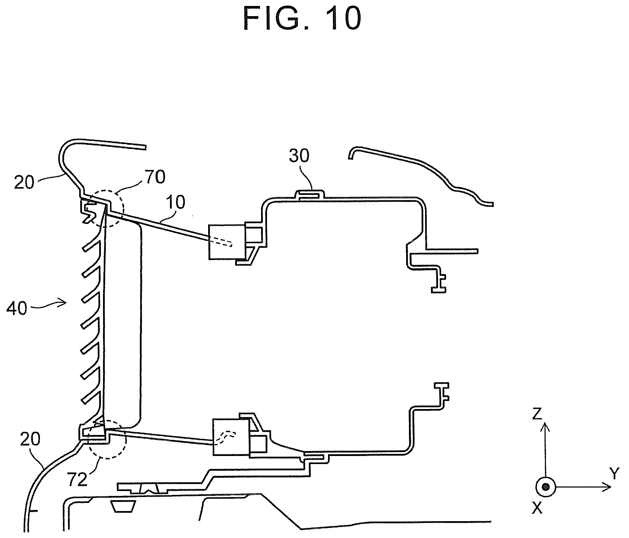

Once the filter 60 is attached to the bezel 40, the bezel 40 is attached to the interior trim 20, thereby locking the filter 60 with respect to the interior trim 20. FIG. 9 is a sectional view of a portion of the duct apparatus after the bezel 40 has been attached to the interior trim 20, when the duct apparatus is viewed from the side (the X direction). The outer peripheral portion 64 of the filter 60 is sandwiched by the bezel 40 and the interior trim 20, as indicated by reference characters 70 and 72. Also, although not shown in FIG. 9, the protruding portions 52 of the bezel 40 are inserted into the recessed portions (valley portions) of the filter 60. FIG. 10 is a sectional view of the duct apparatus after the bezel 40 has been attached to the interior trim 20, when the duct apparatus is in a different position viewed from the X direction. FIG. 10 is a sectional view of locations where the protruding portions 52 are not provided. Even in the locations where the protruding portions 52 are not provided, the outer peripheral portion 64 of the filter 60 is sandwiched by the bezel 40 and the interior trim 20, as indicated by reference characters 70 and 72.

As described above, in the first example embodiment, the outer peripheral portion 64 of the filter 60 is sandwiched by the bezel 40 and the interior trim 20. As a result, the filter 60 is firmly fixed to the duct apparatus. Also, the protruding portions 52 of the bezel 40 are inserted into the recessed portions (valley portions) of the filter 60. As a result, surface displacement of the filter 60 is restricted, so the filter 60 will not easily come off of the duct apparatus. Therefore, the filter 60 can be fixed more firmly to the duct apparatus. If the protruding portions 52 were not inserted into the recessed portions of the filter 60, the filter 60 may come out of position in the plane due to vibration or wind or the like, such that force may be applied to the outer peripheral portion 64 of the filter 60, and the filter 60 may then tend to slip out of the duct flow path. In this example embodiment, surface displacement of the filter 60 is restricted by the protruding portions 52, so such a problem can be avoided. Also, the protruding portions 52 are inserted into some of the recessed portions, of the plurality of protruding and recessed portions. That is, surface displacement of the filter 60 can be restricted using the protruding and recessed portions provided to increase the surface area.

Protruding portions 52 may also be provided in yet another position on the lattice portion 44 of the bezel 40. For example, other protruding portions 52 may also be provided on a lattice member in the center of the lattice portion 44.

In this example embodiment, the outer peripheral portion 64 of the filter 60 is sandwiched by the bezel 40 and the interior trim 20 that is an existing part of the vehicle. Therefore, such an embodiment can avoid an increase in cost when compared to embodiments where the outer peripheral portion 64 of the filter 60 is sandwiched using another member.

Also, pressure loss typically decreases as the area of the region of the filter through which air passes increases. As described above, the cross-sectional area of the flow path in the air intake duct 10 is greatest at the inlet 12, so the filter 60 is preferably arranged as close to the inlet 12 as possible, i.e., near the bezel 40. In the first example embodiment, the filter 60 is attached to the bezel 40, so the area of the filter 60 can be increased compared to when the filter 60 is arranged in another position inside the air intake duct 10. Also, pressure loss can be reduced, so sufficient draw (i.e., suction) can be obtained even without using a large blower 30.

Meanwhile, even if the filter 60 is arranged near the inlet 12, when the filter 60 is arranged on the front surface of the bezel 40 that is toward the inside of the cabin, problems may occur, for instance,., a user may end up touching the filter 60 and the filter 60 may come off. In the first example embodiment, the filter 60 is arranged on the back surface of the bezel 40, so this kind of problem can be avoided.

Also, the filter 60 is attached to the bezel 40 so as to be integrated with the bezel 40, so the filter 60 can be easily removed from the duct apparatus by removing the bezel 40 from the interior trim 20. Therefore, replacing and cleaning the filter 60 can be done easily.

### [Second example embodiment]

Next, a duct apparatus according to a second example embodiment of the invention will be described. FIG. 1 is a sectional view of a duct apparatus according to the second example embodiment, viewed from above the duct apparatus (i.e., from the Z direction).

The air intake duct 10, the interior trim 20, and the blower 30 have the same structures as in the first example embodiment, so descriptions of these will be omitted.

A lattice-shaped bezel 80, for example, is provided on the inlet 12 of the air intake duct 10. A bezel fixing clip, not shown, for attaching the bezel 80 to the interior trim 20 is provided on the bezel 80. A mounting hole is formed in a position corresponding to the bezel fixing clip, in the interior trim 20. The bezel 80 is fixed to the interior trim 20 by the bezel fixing clip being inserted into and fixed to the mounting hole.

A resin support frame 90 that is a frame-like member and a filter 110 are arranged on the back surface of the bezel 80. The filter 110 is attached and fixed to the front surface of the support frame 90. The filter 110 has a network structure, and is used to remove foreign matter that passes through the air intake duct 10. A non-woven fabric or mesh type filter, for example, may be used as the filter 110, similar to the first example embodiment. The filter 110 is formed as a plurality of protruding and recessed portions in a zigzag shape (mountain and valley shape), for example, in order to increase the surface area. An outer peripheral portion 114 of the filter 110 is sandwiched by the bezel 80 and the support frame 90.

Here, when the Z direction is the vertical direction of the vehicle, protruding portions 100 are provided in positions on the upper and lower sides of the front surface of the support frame 90. Also, when the X direction is the left-right direction of the vehicle, the protruding portions 100 are provided in positions on the left and right sides on the front surface of the support frame 90. The protruding portions 100 are protrusions for preventing the filter from coming off, and are inserted into recessed portions (i.e., valleys portions) of the filter 110. As a result, surface displacement of the filter 110 is restricted so the filter 110 will not easily slip out of the duct flow path, similar to the first example embodiment.

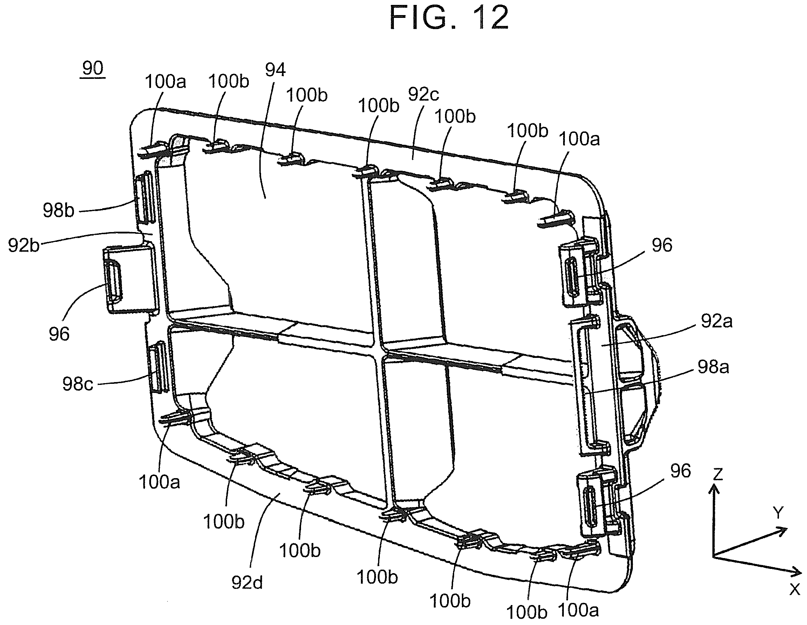

Next, the specific structure of the support frame 90 will be described with reference to FIG. 12. The support frame 90 is a rectangular-shaped frame, and has openings 94. Air that has passed through the bezel 80 and the filter 110 is drawn into the air intake duct 10 via these openings 94. Protruding support frame fixing clips 96 for attaching the support frame 90 to the bezel 80 are provided on the front surface of the support frame 90. In the example shown in FIG. 12, two support frame fixing clips 96 are provided on a right side frame member 92a, and one support frame fixing clip 96 is provided on a left side frame member 92b. Mounting holes are formed in positions corresponding to the support frame fixing clips 96, in the bezel 80. The support frame 90 is fixed to the bezel 80 by the support frame fixing clips 96 being inserted into fixed to the corresponding mounting holes.

Also, an insertion hole 98a and insertion grooves 98b and 98c for attaching the filter 110 to the support frame 90 are formed in the front surface of the support frame 90. The insertion hole 98a is formed in the right side frame member 92a, and the insertion grooves 98b and 98c are formed in the left side frame member 92b. Protruding portions are provided in positions corresponding to the insertion hole 98a and the insertion grooves 98b and 98c, on the filter 110. The filter 110 is attached and fixed to the support frame 90 by the corresponding protruding portions being inserted into the insertion hole 98a and the insertion grooves 98b and 98c.

Also, protruding portions 100 are provided in positions corresponding to recessed portions provided to the inside of the outer peripheral portion 114 of the filter 110, on the front surface of the support frame 90. For example, a protruding portion 100a is provided in a position to the inside of the right side frame member 92a, on each of an upper side frame member 92c and a lower side frame member 92d. These protruding portions 100a are members corresponding to recessed portions provided to the inside of the outer peripheral portion 114 on the right side of the filter 110. A protruding portion 100a is also provided in a position to the inside of the left side frame member 92b, on each of the upper side frame member 92c and the lower side frame member 92d. These protruding portions 100a are members corresponding to recessed portions provided to the inside of the outer peripheral portion 114 on the left side of the filter 110. Moreover, five protruding portions 100b are provided between the two protruding portions 100a on each of the upper side frame member 92c and the lower side frame member 92d.

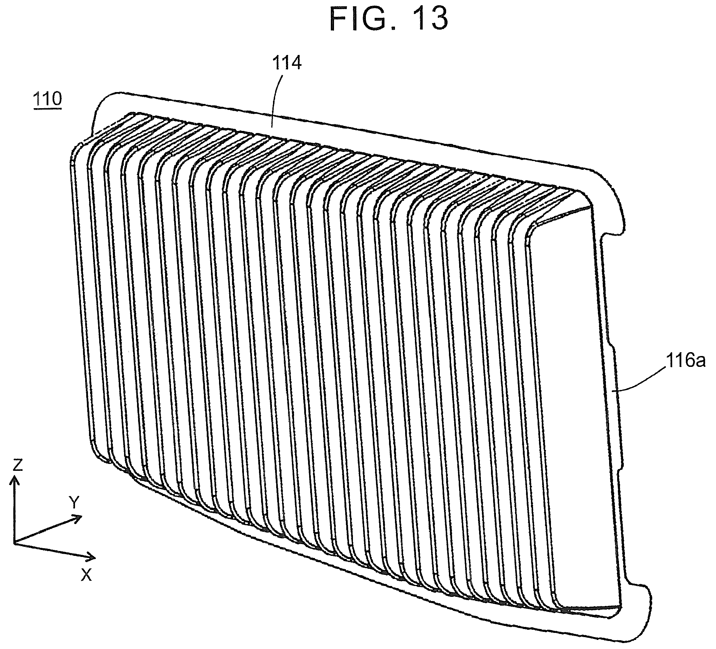

FIG. 13 is a view of the specific structure of the filter 110. The filter 110 has an overall rectangular shape, and a filter surface thereof is formed as a plurality of protruding and recessed portions in a zigzag shape (commonly referred to as "mountain and valley shape"). That is, when the X direction is a crosswise direction and the Z direction is a vertical direction, the plurality of protruding and recessed portions are provided lined up in the crosswise direction of the filter 110, and these protruding and recessed portions extend in the vertical direction. The flat outer peripheral portion 114 is provided on an outer periphery of the filter 110, and protruding portions corresponding to the insertion hole 98a and the insertion grooves 98b and 98c of the support frame 90 are provided on this outer peripheral portion 114. For example, a protruding portion 116a corresponding to the insertion hole 98a is formed on an end portion on the right side of the filter 110. Also, although not shown in FIG. 13, protruding portions corresponding to the insertion grooves 98b and 98c are formed on an end portion on the left side of the filter 110. The filter 110 is attached and fixed to the support frame 90 by these protruding portions being inserted into the insertion hole 98a and the insertion grooves 98b and 98c of the support frame 90.

In the second example embodiment, the insertion hole 98a and the insertion grooves 98b and 98c of the support frame 90, and the protruding portions of the filter 110, function as supporting members for fixing the outer peripheral portion 114 of the filter 110 to the bezel 80.

When the filter 110 is attached to the support frame 90, the protruding portions 100 provided on the support frame 90 are inserted into the recessed portions (valley portions) of the filter 110. More specifically, the protruding portion 100a provided in a position to the inside of the right side frame member 92a is inserted into the recessed portion provided to the inside of the outer peripheral portion 114 on the right side of the filter 110. Similarly, the protruding portion 100a provided in a position to the inside of the left side frame member 92b is inserted into the recess portion provided to the inside of the outer peripheral portion 114 on the left side of the filter 110. Moreover, the other five protruding portions 100b are inserted into the corresponding recessed portions. Therefore, the protruding portions 100a and 100b on the upper side frame member 92c are inserted into the upper side of the recessed portions, and the protruding portions 100a and 100b on the lower side frame member 92d are inserted into the lower side of the recessed portions.

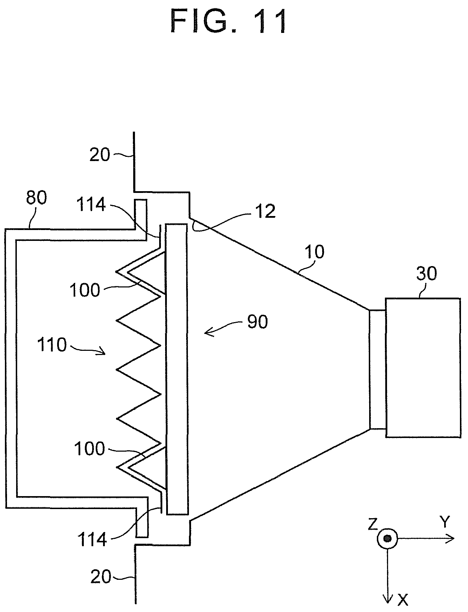

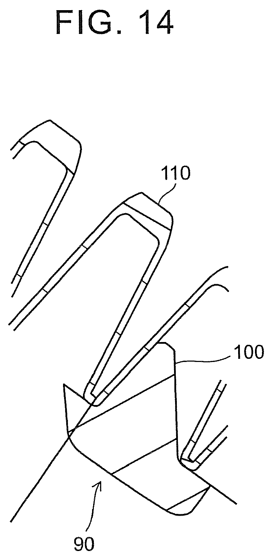

When the filter 110 is attached to the support frame 90, the support frame 90 is attached to the bezel 80, and the bezel 80 is attached to the interior trim 20. Therefore, the outer peripheral portion 114 of the filter 110 is sandwiched by the bezel 80 and the support frame 90, and the protruding portions 100 of the support frame 90 are inserted into the recessed portions of the filter 110, as shown in FIG. 11. FIG. 14 is an enlarged sectional view of one of the protruding portions 100 in a state inserted into one of the recessed portions of the filter 110. Surface displacement of the filter 110 can be restricted by restraining the filter 110 with the protruding portions 100.

As described above, in the second example embodiment, the outer peripheral portion 114 of the filter 110 is sandwiched by the bezel 80 and the support frame 90. As a result, the filter 110 is firmly fixed to the duct apparatus. Also, the protruding portions 100 of the support frame 90 are inserted into the recessed portions (valley portions) of the filter 110. As a result, surface displacement of the filter 110 is restricted, so the filter 110 will not easily come off of the duct apparatus. Therefore, the filter 110 can be more firmly fixed to the duct apparatus.

In the duct apparatus according to the second example embodiment as well, pressure loss can be reduced, similar to the first example embodiment. Also, the coming off of the filter as a result of contact by the user or the like can be prevented . Also, the filter 110 is attached to the support frame 90, and the support frame 90 is attached to the bezel 80. Therefore, the filter 110 can be removed easily from the duct apparatus by removing the bezel 80 from the interior trim 20. Thus, replacing and cleaning the filter 110 is easy.

The first and second example embodiments can also be combined. For example, protruding portions may be provided on both the bezel 80 and the support frame 90, and these protruding portions may be inserted into recessed portions on the filter 110. In this case, the protruding portions are inserted into recessed portions on both surfaces of the filter 110. As a result, surface displacement of the filter 110 is even more restricted, which enables to make it even more difficult for the filter 110 to come off of the duct apparatus, and therefore to improve the reliability of the apparatus.

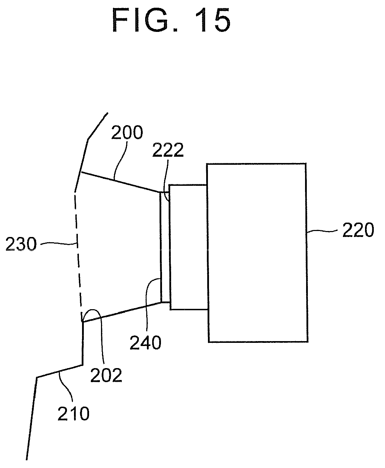

Next, a duct apparatus according to a comparative example will be described with reference to FIG. 15. An air intake duct 200 includes an inlet 202 that is exposed to the inside of a vehicle cabin from an interior trim 210 of a vehicle. A lattice-shaped bezel 230 is provided on the inlet 202. A blower 220 is connected to the air intake duct 200. A filter 240 for removing foreign matter is arranged on an inlet 222 of the blower 220. Air inside the vehicle cabin is drawn into the air intake duct 200 via the inlet 202 and the bezel 230, by the blower 220 being driven. Air that has passed through the blower 220 is sent to a battery module, not shown. As a result, the battery module is cooled.

As described above, the filter 240 is arranged on the inlet 222 of the blower 220. Therefore, in order to replace or clean the filter 240, the blower 220 must be removed. To remove the blower 220, interior trim of the vehicle, a seat frame, a seat cushion, and a seatbelt and the like must first be removed, so the number of man-hours that are required when replacing or cleaning the filter 240 increases, which is problematic. Also, because the cross-sectional area of the inlet 222 is the smallest in the flow path, the size of the filter 240 must be reduced to match it. Therefore, pressure loss at the filter 240 ends up increasing. In contrast, as described above with the duct apparatus according to the first and second example embodiments, these problems can be avoided.

## Claims

1. A cooling duct apparatus for an onboard battery, the cooling duct apparatus being **characterized in that** it comprises:
an air intake duct (10) configured to lead cooling air to a battery module mounted in a vehicle for cooling said battery module ;
a bezel (40) provided on an inlet of the air intake duct (10);
a filter (60) provided on a back surface of the bezel (40);
a supporting member (50, 66, 110) that fixes the filter (60) to the bezel (40); and
a protruding portion (52) being provided on at least one of the bezel (40) and the supporting member (50, 66, 110), wherein the protruding portion (52) restricts surface displacement of the filter (60) with respect to the air intake duct (10) by being inserted into a recessed portion provided to an inside of an outer peripheral portion of the filter (60).

2. The cooling duct apparatus according to claim 1, **characterized in that**
a plurality of protruding and recessed portions are provided lined up in a predetermined direction on the filter (60); and
the protruding portion (52) is provided in a position corresponding to the recessed portion provided to the inside of the outer peripheral portion of the filter (60), on at least one of the bezel (40) and the supporting member (50,66, 110).

3. The cooling duct apparatus according to claim 2, **characterized in that**
the protruding portion (52) is disposed in a portion among the recessed portions included in the plurality of protruding and recessed portions.

4. The cooling duct apparatus according to any one of claims 1 to 3, **characterized in that**
the supporting member (50, 66, 110) is an interior trim of the vehicle.
